# EUROPÄISCHE PATENTSCHRIFT

(11) **EP 3 059 076 B1**
(45) Veröffentlichungstag und Bekanntmachung des Hinweises auf die Patenterteilung: **04.04.2018**
(21) Anmeldenummer: 16155718.6
(22) Anmeldetag: 15.02.2016
(51) Int. Cl.: B29C 67/00, B22F 3/105

(54) **VORRICHTUNG UND VERFAHREN ZUM HERSTELLEN EINES DREIDIMENSIONALEN OBJEKTS**
METHOD AND DEVICE FOR GENERATING A THREE-DIMENSIONAL OBJECT
PROCEDE ET DISPOSITIF DESTINES A FABRIQUER UN OBJET TRIDIMENSIONNEL

(30) Priorität: 18.02.2015 DE 102015202964
(43) Veröffentlichungstag der Anmeldung: 24.08.2016
(73) Patentinhaber: EOS GmbH Electro Optical Systems, 82152 Krailling (DE)
(72) Erfinder: OBERHOFER, Johann, 82131 Stockdorf (DE)
(74) Vertreter: Prüfer & Partner mbB Patentanwälte · Rechtsanwälte

(56) Entgegenhaltungen:
- EP-A1- 1 388 411
- EP-A1- 2 340 925
- WO-A1-2006/105827
- WO-A1-2014/012764

## Beschreibung

Die vorliegende Erfindung bezieht sich auf eine Vorrichtung und ein Verfahren zum Herstellen eines dreidimensionalen Objektes durch selektives schichtweises Verfestigen von pulverförmigem Aufbaumaterial durch Energieeinbringung.

Ein Verfahren dieser Art wird beispielsweise zum Rapid Prototyping, Rapid Tooling oder Rapid Manufacturing verwendet. Ein Beispiel eines solchen Verfahrens ist unter dem Namen "selektives Lasersintern oder Laserschmelzen" bekannt. Dabei wird Pulver durch selektives Bestrahlen mit einem Laserstrahl selektiv verfestigt, indem mittels der mit dem Laserstrahl eingebrachten Wärmeenergie das Material vollständig oder oberflächlich aufgeschmolzen wird, so dass die Pulverkörner sich nach der nachfolgenden Abkühlung miteinander verbunden haben. Neben Laserstrahlung kann auch eine andere elektromagnetische Strahlung oder beispielsweise auch ein Elektronenstrahl für die Energieeinbringung verwendet werden.

WO 2014/012764 A1 beschreibt ein Verfahren und eine Vorrichtung zum Herstellen eines dreidimensionalen Objekts durch schichtweises Aufbringen und selektives Verfestigen eines pulverförmigen Aufbaumaterials. Insbesondere im Randbereich des herzustellenden Objekts werden mehrere dünne Pulverteilschichten aufgetragen, die erst nach dem Auftrag der letzten Pulverteilschicht verfestigt werden. In einem Kernbereich findet demgegenüber eine Verfestigung des Materials nach dem Aufbringen jeder Schicht statt.

EP 1 388 411 A1 beschreibt ein Verfahren zum Herstellen eines dreidimensionalen Objekts, bei dem ein Schritt des gesteuerten Erwärmens einer aufgetragenen Pulverschicht und des Bestimmens der von dem Pulver aufgenommenen Wärmemenge pro Temperaturintervall für wenigstens zwei Temperaturintervalle vor oder während des eigentlichen Bauprozesses durchgeführt wird.

EP 2 340 925 A1 beschreibt eine Vorrichtung zum generativen Herstellen eines dreidimensionalen Objekts mit kontinuierlicher Wärmezufuhr. Eine Heizvorrichtung führt zumindest der Baufeldumgebung oder dem Bauraum darüber kontinuierlich Wärme zu.

WO 2006/105827 A1 beschreibt eine Vorrichtung und ein Verfahren zum Herstellen von dreidimensionalen Objekten, bei denen eine Temperaturmesseinrichtung zum berührungslosen Messen der Temperatur des Aufbaumaterials vorhanden ist. Insbesondere wird die Lage des Messbereichs der Temperaturmesseinrichtung unabhängig von der Lage des Bereichs, auf den die elektromagnetische oder Teilchenstrahlung zum Verfestigen des Aufbaumaterials einwirkt, verändert.

EP 1 583 626 B1 beschreibt eine Vorrichtung und ein Verfahren, durch welche Objekte trotz angestrebter höherer Fertigungsgeschwindigkeit mit hoher Genauigkeit hergestellt werden. Insbesondere wird vorgeschlagen, beim Verfestigen einer Schicht eines pulverförmigen Baumaterials zur Generierung eines Querschnitts des herzustellenden Objekts den Energiestrahl abwechselnd unterschiedlichen Bereichen des Objektquerschnitts zuzuführen. Im Besonderen wird während des Herstellungsvorgangs mittels einer Wärmebildkamera die zu verfestigende Pulverschicht aufgenommen und nach einer Analyse der Temperaturverteilung in der Pulverschicht gezielt die Temperatur an einzelnen Stellen der Pulverschicht korrigiert. Die hierzu erforderlichen Berechnungen zur Ermittlung der Art und Weise der Ausbreitung der Wärmeenergie nach dem Energieeintrag mittels des Energiestrahls machen jedoch das Verfahren relativ kompliziert.

Spannungen, die durch das Vorgehen in EP 1 583 626 B1 reduziert werden sollen, treten in mittels eines generativen Schichtbauverfahrens hergestellten Objekten insbesondere dann auf, wenn die Temperatur der Pulverschicht, bevor der Energiestrahl auf sie auftrifft, deutlich unterhalb der Temperatur liegt, bei der eine Verfestigung des pulverförmigen Materials durch Aufschmelzen desselben stattfindet. Insbesondere, aber nicht nur, treten solche Spannungsprobleme also bei metallischen Pulvermaterialien auf.

Es ist daher die Aufgabe der vorliegenden Erfindung, eine verbesserte Vorrichtung und ein verbessertes Verfahren zum Herstellen von dreidimensionalen Objekten bereitzustellen. Dabei sollen bevorzugt auf möglichst einfache Weise spannungsfreie Bauteile hergestellt werden können.

Die Aufgabe wird gelöst durch eine Vorrichtung nach Anspruch 1 und ein Verfahren nach Anspruch 13. Weiterbildungen der Erfindung sind jeweils in den Unteransprüchen angegeben. Dabei können die Vorrichtungen auch durch die untenstehenden bzw. in den Unteransprüchen ausgeführten Merkmale der Verfahren weitergebildet sein oder umgekehrt.

Eine erfindungsgemäße Vorrichtung zur Herstellung eines dreidimensionalen Objekts mittels schichtweiser Verfestigung eines pulverförmigen Aufbaumaterials durch elektromagnetische Strahlung oder Teilchenstrahlung enthält: einen höhenverfahrbaren Träger, auf dem das Objekt aufgebaut wird und dessen horizontale Ausdehnung ein Baufeld definiert, eine Bestrahlungsvorrichtung zum Richten der elektromagnetischen Strahlung oder Teilchenstrahlung auf einem Objektquerschnitt entsprechende Bereiche einer aufgetragenen Schicht des Aufbaumaterials innerhalb des Baufelds und eine Steuereinheit zum Steuern der Bestrahlungsvorrichtung dergestalt, dass die Pulverpartikel des Aufbaumaterials an den Stellen, an denen die elektromagnetische Strahlung oder Teilchenstrahlung auf das Aufbaumaterial auftrifft, sich miteinander verbinden. Dabei ist insbesondere eine selektive Heizvorrichtung vorhanden, die so ausgebildet ist, dass eine beliebige Teilfläche des Baufeldes auf eine Plateautemperatur geheizt werden kann. Die Plateautemperatur ist dabei signifikant höher als eine mindestens bereichsweise Temperatur des Baufeldes außerhalb der Teilfläche. Die Steuereinheit ist weiterhin so ausgelegt, dass sie die selektive Heizvorrichtung so ansteuert, dass die Teilfläche einen vordefinierten Mindestabstand d zum Rand des Baufelds aufweist.

Bei solch einer Vorrichtung muss nicht das gesamte Baufeld auf eine hohe Temperatur gebracht werden, um den Temperaturunterschied zwischen dem aufgeschmolzenen Material und seiner Umgebung, insbesondere dem umgebenden unverfestigten Pulvermaterial, zu verringern und als Folge davon Spannungsrisse zu verringern. Vielmehr wird durch einen Mindestabstand zum Rand des Baufelds die Vorrichtung vor den hohen Temperaturen geschützt, indem das unverfestigte pulverförmige Baumaterial, welches ein herzustellendes Objekt umgibt, als Isolator dient. Des Weiteren kann eine Pulverschicht im Baufeld selektiv, d.h. nur an ausgewählten Stellen, beheizt werden.

Die Plateautemperatur kann z.B. eine Temperatur des unverfestigten Baumaterials unmittelbar vor dem Zuführen der Energie zum Verfestigen desselben sein. Weiterhin kann die Plateautemperatur auch eine Temperatur sein, die so eingestellt wird, dass ein bereits verfestigter Objektquerschnitt nur langsam abkühlt. Vorzugsweise ist die Plateautemperatur höchstens 200°C, besonders bevorzugt höchstens 150°C und ganz besonders bevorzugt höchstens 100°C geringer als eine Aktivierungstemperatur des Aufbaumaterials, d.h. eine Temperatur, bei der durch Modifikation der chemischen und/oder physikalischen Eigenschaften des Pulvers die Pulverpartikel so miteinander verbunden werden, dass nach einem Abkühlen ein fester Körper entsteht. Durch das Vorheizen des Baumaterials auf die Plateautemperatur möglichst nahe der Aktivierungstemperatur wird die durch die Bestrahlungsvorrichtung eingetragene Energie weitgehend für den eigentlichen Verfestigungsvorgang genutzt und in nicht so starkem Maße für das Vorwärmen des Pulvers. Dadurch kann der Verfestigungsvorgang insgesamt kontrollierter stattfinden.

Vorzugsweise weist die Steuereinheit einen Datenspeicher auf, in dem Materialparameterwerte bezüglich eines thermischen Verhaltens mindestens eines Aufbaumaterials, bevorzugt unterschiedlicher Aufbaumaterialien, gespeichert sind. Damit wird es insbesondere möglich, den Heizvorgang in Abhängigkeit von dem in der Vorrichtung verwendeten Aufbaumaterial zu steuern. Weiter bevorzugt legt die Steuereinheit im Betrieb, also während des Herstellungsvorgangs, den Mindestabstand d zum Rand des Baufelds in Abhängigkeit von den in dem Datenspeicher abgelegten Materialparameterwerten des verwendeten Aufbaumaterials fest. Hierdurch ist es möglich, den Mindestabstand zum Rande des Baufelds in Abhängigkeit von den jeweiligen Isolationseigenschaften einer das herzustellende Objekt umgebenden Menge des unverfestigten Aufbaumaterials festzulegen.

Allgemein soll im Rahmen der Erfindung der Mindestabstand zum Rande des Baufelds möglichst klein gehalten werden, um nicht unnötig Platz im Baufeld zu blockieren. Auf der anderen Seite soll dieser Mindestabstand ausreichend dimensioniert sein, um andere Bereiche der Vorrichtung vor Beschädigungen aufgrund zu hoher Temperaturbeanspruchung zu schützen.

Bevorzugt legt die Steuereinheit im Betrieb die Gestalt einer selektiv zu beheizenden Teilfläche, unter anderem also deren Form und/oder Abmessungen, in Abhängigkeit von der Gestalt des zu verfestigenden Objektquerschnitts fest. Hierdurch kann die mittels der selektiven Heizvorrichtung zu beheizende Fläche der Pulverschicht besonders effektiv auf das unbedingt notwendige Maß begrenzt werden, wodurch sich die Energieeffizienz verbessert.

Weiterhin legt die Steuereinheit im Betrieb bevorzugt eine Teilfläche so fest, dass deren Flächenmaß größer ist als jenes des zu verfestigenden Objektquerschnitts. Hierdurch wird nicht nur ein zu verfestigender Objektquerschnitt, sondern auch ein Teil des ihn umgebenden Pulvers mitbeheizt, so dass der Wärmeabfluss von den zu verfestigenden Stellen am Rande des Objektquerschnitts vermindert ist. Dies führt ebenfalls zu einem Abbau von thermischen Spannungen und/oder verhindert eine unzureichende Verfestigung des Pulvers am Rand des Objektquerschnitts.

In einer bevorzugten Ausführung der Erfindung richtet die selektive Heizvorrichtung im Betrieb elektromagnetische Strahlung, insbesondere Laserstrahlung, und/oder Teilchenstrahlung auf die Oberfläche des Aufbaumaterials. Hierdurch kann eine selektive Beheizung des Aufbaumaterials ohne Verwendung von komplizierten Aufbauten, wie beispielsweise Heizschlangen oder Heizwiderständen, erfolgen. Darüber hinaus kann die Beheizung mit hoher örtlicher Selektivität erfolgen. Wenn insbesondere Laserstrahlung zum selektiven Beheizen verwendet wird und diese Laserstrahlung die gleiche Wellenlänge hat wie jene der Bestrahlungsvorrichtung, falls diese auch einen Laser verwendet, so kann man die Laserstrahlung zum selektiven Beheizen aus derselben Laserquelle abzweigen, die auch für die Generation der Verfestigungsstrahlung verwendet wird.

Bevorzugt ist das Baufeld von einem Behälter umgeben, wobei zusätzlich noch eine Kühl- und/oder Heizvorrichtung zur Kühlung und/oder Beheizung des Behälters vorhanden ist. Durch eine Beheizung des Behälters kann zusätzlich dem pulverförmigen Aufbaumaterial Wärme zugeführt werden, so dass die selektive Heizvorrichtung geringer dimensioniert werden kann. Durch eine Kühlung des das Baufeld umgebenden Behälters kann gezielt Wärme abgeführt werden und die den Behälter umgebenden Teile der Vorrichtung können gegenüber der Wärme im Baufeld geschützt werden. Durch die Kühlung können insbesondere stationäre thermische Verhältnisse in der Umgebung des Behälters hergestellt werden, indem eine Behälterwandung auf einen vorgegebenen Temperaturwert herabgekühlt wird. Durch eine geeignete Kühlung ist es zudem möglich, den oben ausgeführten Mindestabstand vom Rand des Baufelds zu reduzieren. Eine solche Reduzierung erfolgt bevorzugt in Abhängigkeit von ermittelten (d.h. gemessenen oder rechnerisch ermittelten) Kühlungsparameterwerten der Kühlung.

Die Vorrichtung zum Herstellen eines dreidimensionalen Objekts kann auch eine Temperaturmesseinrichtung aufweisen, welche zumindest in einem Teilbereich des Baufelds, vorzugsweise nahe dessen Rand, eine Temperaturmessung durchführt. Bevorzugt kann dann die Steuereinheit während des Herstellvorgangs von Objekten die Wärmezufuhr durch die selektive Heizvorrichtung so steuern, dass eine Mindest-Plateautemperatur, auf die eine Teilfläche des Baufeldes geheizt wird, in mindestens einem Betriebszustand (d.h. nicht zwangsläufig während des gesamten Herstellvorgangs in einer Schicht, sondern bedarfsweise auch zeitweise) um einen vorbestimmten Betrag oberhalb einer von der Temperaturmesseinrichtung an die Steuereinheit übermittelten Temperatur liegt.

Durch die Überwachung der Temperatur kann die Beheizung des Aufbaumaterials mittels der selektiven Heizvorrichtung gezielt an die zu einem bestimmten Zeitpunkt in der Vorrichtung vorliegenden konkreten Verhältnisse angepasst werden. Insbesondere kann auch die Steuereinheit die selektive Heizvorrichtung so steuern, dass die Teilfläche auf eine Mindest-Plateautemperatur geheizt wird, die um mindestens 300°C, bevorzugt mindestens 400°C, besonders bevorzugt mindestens 800°C oberhalb der von der Temperaturmesseinrichtung an die Steuereinheit übermittelten Temperatur liegt. Dadurch kann in Abhängigkeit vom verwendeten Baumaterial die Plateautemperatur möglichst nahe an die Aktivierungstemperatur gelegt werden.

Bevorzugt steuert die Steuereinheit die selektive Heizvorrichtung so an, dass letztere vor und/oder nach dem Richten der elektromagnetischen Strahlung oder Teilchenstrahlung der Bestrahlungsvorrichtung auf das Aufbaumaterial die selektive Heizvorrichtung eine Teilfläche des Baufeldes mindestens auf die Plateautemperatur heizt. Damit können der Aufheizvorgang des Aufbaumaterials und/oder der Abkühlvorgang nach dem Verfestigen desselben in kontrollierterer Weise erfolgen. Ohne die selektive Beheizung sind Temperaturänderungen an dem pulverförmigen Aufbaumaterial während des Überstreichens des Baufeldes mit der Bestrahlungsvorrichtung abrupter und größer.

Insbesondere kann die Steuereinheit die selektive Heizvorrichtung so ansteuern, dass diese nach dem Richten der elektromagnetischen Strahlung oder Teilchenstrahlung der Bestrahlungsvorrichtung auf das Aufbaumaterial eine Teilfläche des Baufeldes dergestalt beheizt, dass eine Abkühlrate in der Teilfläche um mindestens 30%, bevorzugt mindestens 50%, besonders bevorzugt mindestens 70% geringer ist als ohne die Einwirkung der selektiven Heizvorrichtung. Mittels einer dergestalt ausgebildeten Vorrichtung ist es möglich, den Abkühlvorgang nach der Verfestigung des Pulvers zu verzögern, was in besonderem Maße der Verhinderung von Spannungsrissen dient.

Mit einer erfindungsgemäßen Vorrichtung ist ein Verfahren zum Herstellen eines dreidimensionalen Objekts mittels schichtweiser Verfestigung eines pulverförmigen Aufbaumaterials durch elektromagnetische Strahlung oder Teilchenstrahlung möglich, bei dem ein Objekt auf einem höhenverfahrbaren Träger, dessen horizontale Ausdehnung ein Baufeld definiert, aufgebaut wird und elektromagnetische Strahlung oder Teilchenstrahlung mit Hilfe einer Bestrahlungsvorrichtung auf einem Objektquerschnitt entsprechende Bereiche einer aufgetragenen Schicht des Aufbaumaterials innerhalb des Baufelds gerichtet wird, wobei die Bestrahlungsvorrichtung mit einer Steuereinheit dergestalt gesteuert wird, dass die Pulverpartikel des Aufbaumaterials an den Stellen, an denen die elektromagnetische Strahlung oder Teilchenstrahlung auf das Aufbaumaterial auftrifft, sich miteinander verbinden. Insbesondere wird mit einer selektiven Heizvorrichtung eine beliebige Teilfläche des Baufelds auf eine Plateautemperatur geheizt, wobei die Plateautemperatur signifikant höher ist als eine mindestens bereichsweise vorhandene Temperatur des Baufeldes außerhalb der Teilfläche. Die Steuereinheit steuert dabei die selektive Heizvorrichtung so an, dass die Teilfläche einen vordefinierten Mindestabstand d zum Rand des Baufelds aufweist.

Insbesondere kann der Mindestabstand d in Abhängigkeit von Vorversuchen festgelegt werden, in denen das Wärmeübertragungsvermögen des im Verfahren verwendeten Aufbaumaterials ermittelt wird. Hierdurch kann die Beheizung des Aufbaumaterials gezielt an das verwendete Aufbaumaterial mit seinen charakteristischen thermischen Eigenschaften angepasst werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer erfindungsgemäßen Vorrichtung zum schichtweisen Herstellen eines dreidimensionalen Objekts, die zum Durchführen eines erfindungsgemäßen Verfahrens geeignet ist.
- Fig. 2: ist eine Draufsicht auf das Baufeld der Vorrichtung aus Fig. 1, in dem exemplarisch ein aktuell zu verfestigender Objektquerschnitt gezeigt ist.
- Fig. 3: veranschaulicht einen Vorversuch zur Bestimmung des Wärmeübertragungsverhaltens des pulverförmigen Aufbaumaterials.

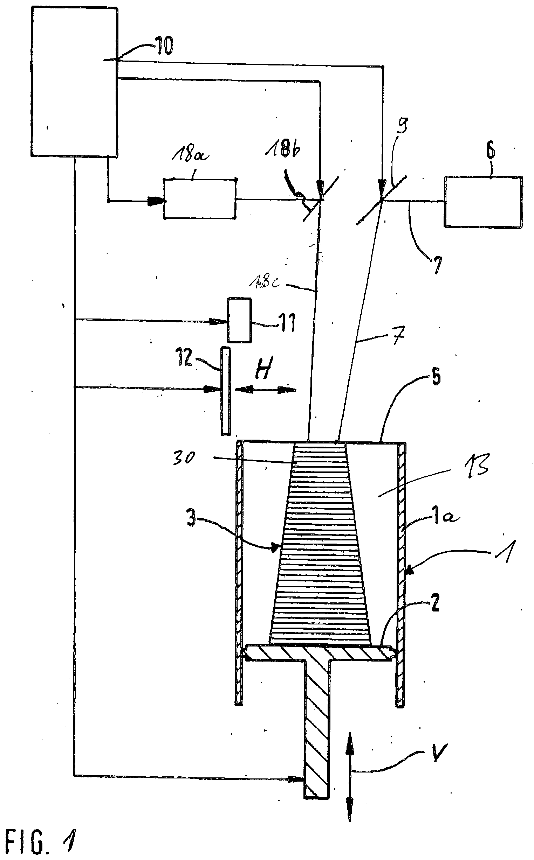

Im Folgenden wird mit Bezug auf Fig. 1 ein Beispiel einer erfindungsgemäßen Vorrichtung 100 beschrieben, die zum Durchführen eines erfindungsgemäßen Verfahrens geeignet ist. In der Vorrichtung 100 wird ein Objekt 3 in einem nach oben offenen Behälter 1 mit einer Wandung 1a aufgebaut. In dem Behälter 1 ist ein in einer vertikalen Richtung V bewegbarer Träger angeordnet, dessen schematisch dargestellte Tragplatte 2 den Behälter 1 nach unten abschließt und damit dessen Boden bildet. In der Figur nicht dargestellt ist eine eventuell noch vorhandene Bauplattform zwischen der untersten Schicht des Objekts 3 und der Tragplatte 2. In Fig. 1 ist das in dem Behälter 1 zu bildende Objekt 3 in einem Zwischenzustand mit mehreren bereits verfestigten Querschnitten 30 dargestellt, wobei das Objekt 3 von, in der Figur transparent dargestelltem, unverfestigt gebliebenem pulverförmigem Aufbaumaterial 13 umgeben ist.

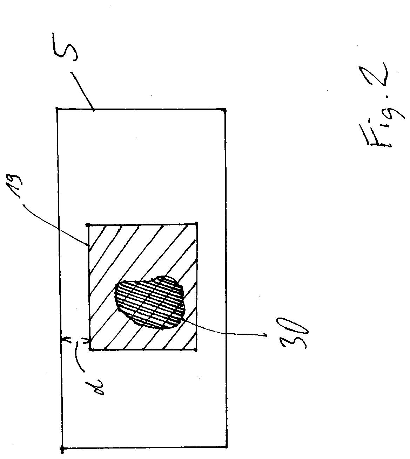

Die Vorrichtung 100 enthält weiterhin einen Vorratsbehälter 11 für ein durch elektromagnetische Strahlung oder Teilchenstrahlung verfestigbares pulverförmiges Aufbaumaterial und einen in einer horizontalen Richtung H bewegbaren Beschichter 12 zum Aufbringen einer Schicht des Aufbaumaterials auf den zuletzt verfestigten Objektquerschnitt 30 und das diesen umgebende unverfestigte Aufbaumaterial innerhalb eines Baufelds 5, das durch die Behälterwandung 1a begrenzt wird. Die Vorrichtung 100 enthält weiterhin eine Bestrahlungsvorrichtung in Gestalt einer ersten Strahlungsquelle 6, z.B. einem Laser, der einen Laserstrahl 7 erzeugt, welcher über eine Ablenkvorrichtung 9 auf eine zuvor durch den Beschichter 12 aufgetragene Schicht unverfestigten Aufbaumaterials gerichtet wird. Zusätzlich ist eine selektive Heizvorrichtung 18a, 18b vorgesehen, welche beispielhaft aus einer zweiten Strahlungsquelle 18a zusammen mit einer weiteren Ablenkvorrichtung 18b ausgebildet ist. Die zweite Strahlungsquelle 18a kann beispielsweise einen Heizstrahl 18c aussenden, welcher mittels der Ablenkvorrichtung 18b auf beliebige Teilflächen 19 des Baufelds 5 (vgl. Fig. 2), das durch die Behälterwandung 1a begrenzt wird, gelenkt werden kann.

Die zweite Strahlungsquelle 18a kann entweder elektromagnetische Strahlung erzeugen, also insbesondere ein Laser sein, oder aber Teilchenstrahlung (z.B. Elektronen) erzeugen. In letzterem Fall würde es sich bei der Ablenkvorrichtung 18b um eine Ionenoptik handeln. Falls es sich bei dem Heizstrahl 18c um einen Laserstrahl handelt, kann optional auf die zweite Strahlungsquelle 18a verzichtet werden und stattdessen für die Erzeugung des Heizstrahls 18c die erste Strahlungsquelle 6 verwendet werden. Hierzu wird dann mittels einer in Fig. 1 nicht gezeigten Zusatzoptik zweckmäßigerweise die Lichtintensität im Vergleich zur Lichtintensität des Verfestigungsstrahls 7 verringert. Alternativ oder zusätzlich kann die mit dem Heizstrahl 18c eingebrachte Wärmemenge auch über die Geschwindigkeit, mit der dieser über die aufgebrachte Schicht des Aufbaumaterials bewegt wird, eingestellt werden.

Weiterhin enthält die Vorrichtung 100 eine Steuereinheit 10, über die die einzelnen Bestandteile der Vorrichtung 100 in koordinierter Weise zum Durchführen des Bauvorgangs gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit 10, geladen werden kann.

Die Ablenkeinrichtung 18b ist so ausgelegt, dass der Heizstrahl 18c der zweiten Strahlungsquelle 18a auf beliebige Bereiche des Baufeldes 5 gelenkt werden kann, insbesondere lediglich auf eine oder mehrere Teilflächen 19 desselben gerichtet werden kann, wobei die Gesamtfläche aller Teilflächen 19 und insbesondere die Fläche einer Teilfläche 19 kleiner ist als die Fläche des Baufelds 5. Insbesondere kann durch die Steuereinrichtung 10 die eingebrachte Wärmeenergie durch Ändern der Leistungsdichte im Auftreffpunkt des Heizstrahls 18c auf das Baufeld 5 und/oder durch Verändern der Scangeschwindigkeit des Heizstrahls 18c eingestellt werden. Die Heizvorrichtung 18a ist so dimensioniert, dass ggf. durch hinreichende Fokussierung des Heizstrahls 18c und/oder genügend langsame Bewegung des Heizstrahls 18c über das Baufeld 5 mindestens so viel Energie in die ggf. bereits bereichsweise verfestigte oberste Pulverschicht eingetragen werden kann, dass die Temperatur im Auftreffpunkt des Heizstrahls 18c signifikant höher ist als in anderen Bereichen des Baufelds 5. Mit "signifikant höher" ist bevorzugt gemeint, dass die Temperatur des pulverförmigen Aufbaumaterials am Auftreffpunkt des Heizstrahls 18c mindestens 300°C, bevorzugt mindestens 400°C und in einigen Fällen mindestens 800°C über der Temperatur des Aufbaumaterials in Bereichen des Baufelds 5 liegt, in denen kein Objektquerschnitt des herzustellenden Objektes liegt, in der Regel in einem Randbereich des Baufelds 5.

Unter Aktivierungstemperatur wird hier eine Temperatur verstanden, bei der die Pulverpartikel infolge einer chemischen und/oder physikalischen Änderung ihrer Eigenschaften sich miteinander verbinden, beispielsweise indem die Pulverpartikel vollständig aufschmelzen oder aber lediglich oberflächlich aufschmelzen und zusammensintern. Die Aktivierungstemperatur ist also eine Grenztemperatur, bei der das Aufbaumaterial in seiner chemischen und/oder physikalischen Struktur wesentlich modifiziert wird.

Weiterhin steuert die Steuersoftware in der Steuervorrichtung 10 den Heizstrahl 18c dergestalt, dass der Auftreffpunkt des Heizstrahls auf das Baufeld 5 stets einen Mindestabstand d zum Rande des Baufelds 5 einhält. Dieser Sachverhalt ist in Fig. 2 gezeigt. Dort ist innerhalb des Baufelds 5 ein zu verfestigender Objektquerschnitt 30 gezeigt, welcher von einer Teilfläche 19 überdeckt wird, in welchem eine Beheizung des Aufbaumaterials mittels des Heizstrahls 18c erfolgt. Wie man sieht, weist der Rand der Teilfläche 19 einen Mindestabstand d zum Rand des Baufelds 5 auf.

Es wird zur Reduzierung von Spannungen im herzustellenden Objekt bevorzugt ein Heizen einer Teilfläche auf eine Plateautemperatur möglichst nahe an der Aktivierungstemperatur angestrebt, also z.B. auf eine Plateautemperatur, die höchstens 200°C, noch bevorzugter höchstens 150°C und besonders bevorzugt höchstens 100°C geringer ist als eine Aktivierungstemperatur des Aufbaumaterials (11). Gegen ein Heizen auf eine zu hohe Temperatur können allerdings die folgenden Punkte sprechen:
- Die Temperatur darf nicht so hoch sein, dass bereits eine Verfestigung des Pulvermaterials stattfindet.
- Je höher die Temperatur ist, desto energieaufwendiger ist der Heizvorgang.
- Je höher die Temperatur ist, desto größer ist auch der Wärmeabfluss zu den Rändern des Baufeldes 5 und eine mögliche schädliche Auswirkung auf die restlichen Teile der Vorrichtung zur schichtweisen generativen Fertigung, in Fig. 1 der Lasersinter- oder Schmelzvorrichtung.

Durch eine Berücksichtigung der Wärmeabfuhreigenschaften des jeweils verwendeten Aufbaumaterials kann gezielt festgelegt werden, auf welche Plateautemperatur das pulverförmige Aufbaumaterial vorgeheizt werden soll. Je besser die durch den Verfestigungsstahl 7 eingetragene Wärme durch das Aufbaumaterial abgeleitet wird, desto schwieriger ist es nämlich, mit dem Verfestigungsstrahl 7 eine Verfestigung herbeizuführen. Je besser also die Wärmeabführeigenschaften des Aufbaumaterials sind, desto näher sollte die Plateautemperatur an der Aktivierungstemperatur liegen.

Auch der Mindestabstand d zum Rande des Baufelds 5 wird durch die Wärmeübertragungseigenschaften des Pulvers beeinflusst. Wie bereits oben erwähnt, soll das Pulver innerhalb dieses Abstands für eine Isolierung zur Außenseite des Baufelds 5 hin sorgen. Je besser also die Wärmeübertragungseigenschaften des unverfestigten pulverförmigen Baumaterials sind, desto größer sollte der Mindestabstand d gewählt werden.

In einer besonderen Ausführungsform weist die Steuereinheit 10 einen Datenspeicher auf, in dem Materialparameterwerte bezüglich der Wärmeübertragungseigenschaften des Aufbaumaterials, das bei einer geplanten Herstellung eines oder mehrerer Objekte verwendet werden soll, gespeichert sind. Bei einem Herstellungsvorgang kann dann die Steuereinheit 10 die Steuerung der selektiven Heizvorrichtung 18a, 18b unter Berücksichtigung dieser Materialparameterwerte durchführen.

Im Idealfall sind in dem Datenspeicher Materialparameter bzw. Materialparameterwerte bezüglich einer Mehrzahl von Aufbaumaterialien gespeichert, so dass vor Beginn eines Bauvorgangs der Steuereinheit 10 lediglich die Art des verwendeten Aufbaumaterials mitgeteilt werden muss.

In einer vorteilhaften Ausführungsform der Erfindung wird vor einem Herstellungsvorgang von Objekten mit der Vorrichtung 100 das Wärmeübertragungsvermögen des Baumaterials in Vorversuchen ermittelt, um bei der Festlegung der Plateautemperatur und des Mindestabstands d berücksichtigt zu werden.

Für die Bestimmung der Wärmeleitfähigkeit von pulverförmigen Materialien bietet sich zunächst das Nadelsonden-Verfahren nach ASTM D5334-08 an. Hierbei wird eine langgestreckte dünne Heizquelle (die Nadelsonde) in eine Pulverschüttung eingebracht und mit konstanter Leistung beheizt. Gleichzeitig wird die Temperatur im Innern der Quelle registriert. Je langsamer die Quellentemperatur ansteigt, desto höher ist die Wärmeleitfähigkeit des Probenmaterials.

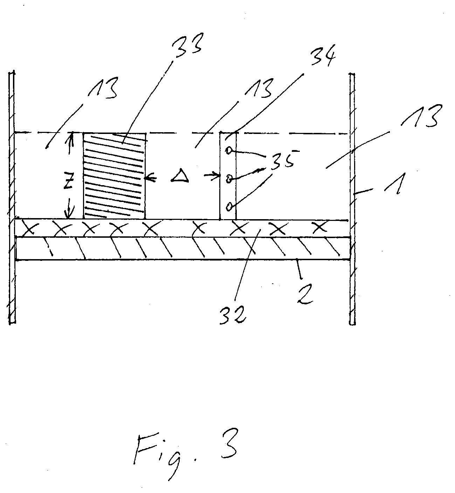

Das Wärmeübertragungsvermögen des Aufbaumaterials kann alternativ oder ergänzend zum vorgenannten Vorgehen mit dem nachstehend in Bezug auf Fig. 3 beschriebenen Vorversuch ermittelt werden. Fig. 3 zeigt vergrößert den Behälter 1 der Vorrichtung 100 zusammen mit der darin angeordneten Tragplatte 2. Auf dieser Tragplatte 2 wird eine wärmeisolierende Unterlage 32 angebracht, auf welcher ein Heizzylinder 33 und ein Messstab 34 mit definiertem Abstand Δ zu dem Heizzylinder 33 angebracht werden. Für den Vorversuch wird der gesamte Behälter 1 mit Aufbaumaterial 13 aufgefüllt bis zu einer Füllhöhe Z, die mit der Höhe des Heizzylinders 33 übereinstimmt. Nachfolgend wird der Heizzylinder 33, z.B. durch eine induktive Erwärmung, auf eine Temperatur Tv vorgeheizt, die beispielsweise um 100°C unterhalb der in dem nachfolgenden eigentlichen Bauvorgang angestrebten Aktivierungstemperatur für das Aufbaumaterial 13 liegt. Natürlich kann auch eine andere Temperatur Tᵥ verwendet werden, je näher jedoch die Temperatur Tᵥ an der Aktivierungstemperatur liegt, desto genauer sind die Aussagen des Vorversuchs über die tatsächlich beim eigentlichen Bauvorgang vorhandene Wärmeübertragungsfähigkeit des Aufbaumaterials.

In dem Messstab 34 sind Temperaturerfassungselemente 35 in unterschiedlichen Höhen angebracht. In der Fig. 3 sind genau drei dieser Elemente dargestellt, es kann jedoch ebenso eine beliebige andere Anzahl von Temperaturerfassungselementen verwendet werden. Nach Beendigung des Aufheizvorgangs auf die Temperatur Tv des Messzylinders 33 wird mit den Temperaturerfassungselementen 35 die Temperatur in Abhängigkeit von der Zeit erfasst. Die zeitliche Änderung der Temperatur ist abhängig von den Wärmeübertragungseigenschaften des Aufbaumaterials 13 im Raum mit dem Abstand Δ zwischen dem Messstab 34 und dem Heizzylinder 33.

Für eine noch genauere Messung der Wärmeübertragungseigenschaften des Pulvers 13 kann auch eine Mehrzahl von Messstäben 34 in unterschiedlichen Abständen Δ₁...Δₙ von dem Heizelement 33 angeordnet werden. Das Heizelement 33 kann beispielsweise ein Zylinder sein, dessen Höhe im Wesentlichen mit der Höhe des massivsten im nachfolgenden Bauvorgang hergestellten Objektes übereinstimmt bzw. dessen Durchmesser im Wesentlichen mit dem Maximaldurchmesser parallel zur Tragplatte 2 des massivsten im nachfolgenden Bauvorgang hergestellten Objektes übereinstimmt.

Alternativ oder zusätzlich zu den soeben beschriebenen Vorversuchen kann die Wärmeleitfähigkeit des Aufbaumaterials auch während des Herstellungsvorgangs von Objekten ermittelt werden.

Hierzu wird mittels einer Wärmebildkamera (IR-Kamera) oder eines Punktpyrometers, dessen Erfassungsfläche über die oberste Pulverschicht bewegt wird, die Temperatur der obersten Pulverschicht an unterschiedlichen Stellen gemessen. Da man weiß, an welchen Stellen der Pulverschicht eine Verfestigung mit dem Verfestigungsstrahl 7 durchgeführt wird und/oder eine Vorheizung mit dem Heizstrahl 18c durchgeführt wird, kann man anhand der Abstände zwischen den Stellen der Pulverschicht, an denen die Temperatur ermittelt wurde, zu den Stellen der Pulverschicht, an denen Energie zugeführt wird, Aussagen über die Wärmeübertragungsfähigkeit des Pulvers gewinnen.

Ansonsten kann man auch mit der Wärmebildkamera oder dem Punktpyrometer gezielt die Temperatur an einer oder mehreren Stellen in dem Baufeld 5 bestimmen und die Heizleistung an die lokal vorliegende Temperatur in dem Zielbereich 19 für die selektive Beheizung anpassen.

Durch Messen der Temperatur an einer oder mehreren Stellen an einem Referenzort im Baufeld 5, bevorzugt nahe dem Rande des Baufeldes 5 an einer Stelle, an der in keiner Schicht Pulver verfestigt wird, kann auch der Mindestabstand d zum Baufeldrand in Abhängigkeit von den erhaltenen Messwerten angepasst werden. Dadurch kann insbesondere der Bereich außerhalb des Baufeldes 5 vor einer Schädigung durch einen zu großen Temperaturanstieg bewahrt werden. Die Temperatur am Referenzort kann aber auch alternativ oder zusätzlich für die Steuerung der Wärmezufuhr in die mindestens eine Teilfläche 19 durch die selektive Heizvorrichtung verwendet werden, so dass eine Mindest-Plateautemperatur, auf die die Teilfläche 19 des Baufeldes 5 geheizt wird, um einen vorbestimmten Betrag oberhalb einer von der Temperaturmesseinrichtung an die Steuereinheit 10 übermittelten Temperatur ist. Die Mindest-Plateautemperatur liegt dabei bevorzugt mindestens 300°C, noch bevorzugter mindestens 400°C, besonders bevorzugt mindestens 800°C oberhalb der von der Temperaturmesseinrichtung an die Steuereinheit 10 übermittelten Temperatur.

Optional kann der Behälter, bevorzugt die Behälterwandung, mit einer Heiz- und/oder Kühlvorrichtung (nicht dargestellt) versehen sein. Eine Heizvorrichtung an dieser Stelle ermöglicht eine zusätzliche Heizung des Aufbaumaterials, so dass durch den Heizstrahl 18c nicht so viel Wärme eingetragen werden muss. Eine Kühlvorrichtung in der Wand des Behälters 1 führt dazu, dass die Temperatur außerhalb des Behälters 1 daran gehindert wird, auf zu hohe Werte anzusteigen. Wenn man die Heizleistung des Heizstrahls 18c, den Mindestabstand d und die Kühlleistung der Kühlung für den Behälter aufeinander abstimmt, so kann man eine stationäre Temperaturverteilung erreichen.

Obwohl im Vorstehenden eine Lasersintervorrichtung bzw. Laserschmelzvorrichtung im Detail beschrieben wurde, ist die Erfindung auch auf andere Vorrichtungen zum Herstellen dreidimensionaler Objekte mittels Einwirkung eines Energiestrahls zum Verfestigen eines pulverförmigen Aufbaumaterials anwendbar. Beispielsweise kann die Energie zum Verfestigen des Pulvers auch über eine flächige Strahlungsquelle, z.B. eine Infrarotheizung, eingebracht werden. Daneben ist es auch möglich, eine Mehrzahl von Strahlungsquellen zum Verfestigen zu verwenden. Weiterhin ist man bei der Strahlung zum Verfestigen des Aufbaumaterials nicht auf elektromagnetische Strahlung eingeschränkt. Vielmehr ist es auch möglich, Teilchenstrahlung zu verwenden, beispielsweise einen Elektronenstrahl.

Auch wenn vorstehend stets von einem Heizstrahl die Rede war, so ist es auch möglich, die Vorheizenergie in einer Teilfläche 19 des Baufeldes 5 nicht über ein Bestreichen der Teilfläche 19 mit einem Strahl einzutragen, sondern vielmehr die Vorheizenergie durch flächige Bestrahlung der mindestens einen Teilfläche 19 oder durch Bestreichen der mindestens einen Teilfläche 19 mit einem Strahleinwirkungsbereich, der nicht punktförmig ist, sondern eine vorbestimmte laterale Ausdehnung und Form aufweist, einzubringen. Beispielsweise kann die Teilfläche 19 mit einem Infrarotstrahler abgescannt werden. Hiervon zu unterscheiden sind im Stand der Technik bekannte Flächenheizungen, mit denen zwar das pulverförmige Aufbaumaterial im gesamten Baufeld beheizt werden kann, mittels derer jedoch nur eine nicht signifikante Temperaturerhöhung einer frisch aufgetragenen Pulverschicht erreicht werden kann.

Das Zuführen von Energie mit dem Heizstrahl kann nicht nur vor dem Beginn eines Verfestigungsvorgangs in einer aufgetragenen Pulverschicht geschehen, sondern auch zeitgleich mit dem Verfestigungsvorgang. Darüber hinaus ist es möglich, solche Teilflächen 19 einer aufgetragenen Pulverschicht mit der selektiven Heizvorrichtung zu bestrahlen, die sich dadurch auszeichnen, dass in darunterliegenden Pulverschichten bereits selektiv verfestigtes Pulvermaterial vorliegt. Hierdurch wird ein zu schnelles Absinken der Temperatur des verfestigten Aufbaumaterials vermieden. Dadurch lassen sich Risse infolge eines zu schnellen Abkühlens des bereits verfestigten Pulvermaterials und damit eines zu schnellen Abkühlens von Teilen eines bereits verfestigten Objektquerschnitts vermeiden. Bevorzugt wird dabei durch die Beheizung mit der selektiven Heizvorrichtung angestrebt, eine Abkühlrate in der oder den Teilflächen 19 um mindestens 30%, bevorzugt mindestens 50%, besonders bevorzugt mindestens 70% geringer zu machen als es ohne die Einwirkung der selektiven Heizvorrichtung 18a, 18b der Fall wäre.

Wie auch beim Stand der Technik kann die gesamte Pulverschicht innerhalb des Baufelds 5 zusätzlich mit einer nichtselektiven Flächenheizung auf eine Starttemperatur vorgeheizt werden, die beispielsweise bei 150°C liegt.

Obwohl dies oben bei der Beschreibung der Ausführungsbeispiele nicht explizit erwähnt wurde, kann bei einem Herstellungsvorgang nicht nur ein Objekt hergestellt werden, sondern es können auch parallel mehrere Objekte in dem Behälter 1 hergestellt werden. Wenn weiter oben auf ein Objekt Bezug genommen wird, beispielsweise ein selektives Beheizen eines Objektquerschnitts, so kann dieses Vorgehen auch auf alle weiteren in dem Herstellungsvorgang herzustellenden Objekte angewendet werden. Beispielsweise würde bei einem Vorliegen von mehreren Objektquerschnitten in einer Pulverschicht das Pulver im Bereich von mehreren Objektquerschnitten, bevorzugt allen, selektiv geheizt.

Wie sich aufgrund des bislang Ausgeführten ergibt, macht eine selektive Beheizung bevorzugt in solchen Teilflächen 19 Sinn, die nahezu identisch mit dem/den zu verfestigenden Objektquerschnitt(en) in einer frisch aufgetragenen Pulverschicht sind. Ebenso kann man die selektive Beheizung auf Teile des Objektquerschnitts/der Objektquerschnitte beschränken, bei denen mit verstärkten Spannungen zu rechnen ist. Man erkennt, dass der oder die mit der selektiven Heizvorrichtung zu beheizenden Teilflächen 19 bevorzugt von Schicht zu Schicht variieren. Darüber hinaus sei bemerkt, dass unterschiedliche Teilflächen 19 in einer frisch aufgetragenen Schicht (die nicht notwendigerweise den Querschnitten unterschiedlicher Objekte zugeordnet sein müssen) nicht zwingend auf ein und dieselbe Plateautemperatur gebracht werden müssen.

Bei einer weiteren möglichen Ausführungsform findet eine selektive Beheizung von Teilflächen 19 einer aufgetragenen Pulverschicht so statt, dass um jede selektiv beheizte Teilfläche 19 herum eine nicht selektiv beheizte Pulverschicht vorhanden ist, die senkrecht zum Rand der Teilfläche 19 mindestens eine laterale Ausdehnung d hat. Auf diese Weise wird um jede selektiv beheizte Teilfläche 19 herum ein Isolationsbereich der Dicke d aus unverfestigtem Pulver geschaffen. Mit dieser Vorgehensweise ist es möglich, die gegenseitige thermische Beeinflussung von Teilflächen 19, beispielsweise wenn parallel mehrere Objekte hergestellt werden, zu verringern. Hierdurch kann der Herstellungsvorgang in kontrollierterer Weise erfolgen.

Das erfindungsgemäße Verfahren und die erfindungsgemäße Vorrichtung eignen sich insbesondere für metallische Aufbaumaterialien. Daneben bringt das erfindungsgemäße vorgehen aber auch Vorteile, wenn andere Aufbaumaterialien, wie z.B. Keramik- oder Kunststoffpulver, insbesondere ein PAEK-Pulver, zum Einsatz kommen

## Patentansprüche

1. Vorrichtung (100) zur Herstellung eines dreidimensionalen Objekts (3) mittels schichtweiser Verfestigung eines pulverförmigen Aufbaumaterials (11) durch elektromagnetische Strahlung oder Teilchenstrahlung mit:
einem höhenverfahrbaren Träger (2), auf dem das Objekt (3) aufgebaut wird und dessen horizontale Ausdehnung ein Baufeld (5) definiert,
einer Bestrahlungsvorrichtung (6, 9) zum Richten der elektromagnetischen Strahlung oder Teilchenstrahlung auf einem Objektquerschnitt (30) entsprechende Bereiche einer aufgetragenen Schicht des Aufbaumaterials innerhalb des Baufelds (5),
einer Steuereinheit (10) zum Steuern der Bestrahlungsvorrichtung (6, 9) dergestalt, dass die Pulverpartikel des Aufbaumaterials (11) an den Stellen, an denen die elektromagnetische Strahlung oder Teilchenstrahlung auf das Aufbaumaterial auftrifft, sich miteinander verbinden,
**gekennzeichnet durch** eine selektive Heizvorrichtung (18a, 18b), die ausgebildet ist, eine beliebige Teilfläche (19) des Baufeldes (5) auf eine Plateautemperatur zu heizen, welche Plateautemperatur signifikant höher ist als eine mindestens bereichsweise Temperatur des Baufeldes (5) außerhalb der Teilfläche (19), wobei die Steuereinheit (10) so ausgelegt ist, dass sie die selektive Heizvorrichtung (18a, 18b) so ansteuert, dass die Teilfläche (19) einen vordefinierten Mindestabstand (d) zum Rand des Baufelds (5) aufweist.

2. Vorrichtung nach Anspruch 1, bei der die Plateautemperatur höchstens 200°C, bevorzugt höchstens 150°C, besonders bevorzugt höchstens 100°C geringer ist als eine Aktivierungstemperatur des Aufbaumaterials (11).

3. Vorrichtung nach Anspruch 1 oder 2, bei der
die Steuereinheit (10) einen Datenspeicher aufweist, in dem Materialparameterwerte bezüglich eines thermischen Verhaltens mindestens eines Aufbaumaterials, bevorzugt unterschiedlicher Aufbaumaterialien, gespeichert sind.

4. Vorrichtung nach Anspruch 3, bei der
die Steuereinheit im Betrieb den Mindestabstand (d) in Abhängigkeit von den in dem Datenspeicher abgelegten Materialparameterwerten des verwendeten Aufbaumaterials (11) festlegt.

5. Vorrichtung nach einem der Ansprüche 1 bis 4, bei der die Steuereinheit (10) im Betrieb die Gestalt der Teilfläche (19) in Abhängigkeit von der Gestalt des zu verfestigenden Objektquerschnitts (30) festlegt.

6. Vorrichtung nach einem der Ansprüche 1 bis 5, bei der die Steuereinheit (10) im Betrieb die Teilfläche (19) so festlegt, dass deren Flächenmaß größer ist als jenes des zu verfestigenden Objektquerschnitts (30).

7. Vorrichtung nach einem der Ansprüche 1 bis 6, bei der die selektive Heizvorrichtung (18a, 18b) im Betrieb elektromagnetische Strahlung, insbesondere Laserstrahlung (18c), und/oder Teilchenstrahlung auf die Oberfläche des Aufbaumaterials (11) richtet.

8. Vorrichtung nach Anspruch 7, bei der die Bestrahlungsvorrichtung (6, 9) Laserstrahlung (7) auf die Oberfläche des Aufbaumaterials (11) richtet und die Laserstrahlung (18c) der selektiven Heizvorrichtung (18a, 18b) die gleiche Wellenlänge hat wie jene der Bestrahlungsvorrichtung (6, 9).

9. Vorrichtung nach einem der Ansprüche 1 bis 8, die weiterhin einen Behälter (1) aufweist, der das Baufeld (5) umgibt, wobei die Vorrichtung eine Kühl- und/oder Heizvorrichtung zur Kühlung und/oder Beheizung des Behälters (1) umfasst.

10. Vorrichtung nach einem der Ansprüche 1 bis 9, mit einer Temperaturmesseinrichtung, vorzugsweise am Rande des Baufelds (5), wobei die Steuereinheit (10) im Betrieb die Wärmezufuhr durch die selektive Heizvorrichtung (18a, 18b) so steuert, dass eine Mindest-Plateautemperatur, auf die die Teilfläche (19) des Baufeldes geheizt wird, in mindestens einem Betriebszustand um einen vorbestimmten Betrag oberhalb einer von der Temperaturmesseinrichtung an die Steuereinheit (10) übermittelten Temperatur ist.

11. Vorrichtung nach Anspruch 10, bei der die Steuereinheit (10) die selektive Heizvorrichtung so steuert, dass die Teilfläche (19) auf eine Mindest-Plateautemperatur vorgeheizt wird, die um mindestens 300°C, bevorzugt mindestens 400°C, besonders bevorzugt mindestens 800°C oberhalb der von der Temperaturmesseinrichtung an die Steuereinheit (10) übermittelten Temperatur liegt.

12. Vorrichtung nach einem der Ansprüche 1 bis 11, bei der die Steuereinheit (10) die selektive Heizvorrichtung (18a, 18b) so ansteuert, dass diese nach dem Richten der elektromagnetischen Strahlung oder Teilchenstrahlung auf das Aufbaumaterial durch die Bestrahlungsvorrichtung (6, 9) eine Teilfläche (19) des Baufeldes (5) dergestalt beheizt, das eine Abkühlrate in der Teilfläche (19) um mindestens 30%, bevorzugt mindestens 50%, besonders bevorzugt mindestens 70% geringer ist als ohne die Einwirkung der selektiven Heizvorrichtung (18a, 18b), wobei die Teilfläche (19) einen vordefinierten Mindestabstand (d) zum Rand des Baufelds (5) aufweist.

13. Verfahren zur Herstellung eines dreidimensionalen Objekts (3) mittels schichtweiser Verfestigung eines pulverförmigen Aufbaumaterials (11) durch elektromagnetische Strahlung oder Teilchenstrahlung in einer Vorrichtung (100), insbesondere gemäß Anspruch 1 bis 12,
wobei ein Objekt (3) auf einem höhenverfahrbaren Träger (2) aufgebaut wird, dessen horizontale Ausdehnung ein Baufeld (5) definiert,
wobei mit Hilfe einer Bestrahlungsvorrichtung (6, 9) die elektromagnetische Strahlung oder Teilchenstrahlung auf einem Objektquerschnitt (30) entsprechende Bereiche einer aufgetragenen Schicht des Aufbaumaterials innerhalb des Baufelds (5) gerichtet wird,
wobei die Bestrahlungsvorrichtung (6, 9) mit einer Steuereinheit (10) dergestalt gesteuert wird, dass die Pulverpartikel des Aufbaumaterials (11) an den Stellen, an denen die elektromagnetische Strahlung oder Teilchenstrahlung auf das Aufbaumaterial auftrifft, sich miteinander verbinden,
**dadurch gekennzeichnet, dass** mit einer selektiven Heizvorrichtung (18a, 18b) eine beliebige Teilfläche (19) des Baufeldes (5) auf eine Plateautemperatur geheizt wird, welche Plateautemperatur signifikant höher ist als eine mindestens bereichsweise Temperatur des Baufeldes (5) außerhalb der Teilfläche (19), wobei die Steuereinheit (10) die selektive Heizvorrichtung (18a, 18b) so ansteuert, dass die Teilfläche (19) einen vordefinierten Mindestabstand (d) zum Rand des Baufelds (5) aufweist.

14. Verfahren nach Anspruch 13, wobei der Mindestabstand (d) in Abhängigkeit von Vorversuchen festgelegt wird, in denen das Wärmeübertragungsvermögen des im Verfahren verwendeten Aufbaumaterials (11) ermittelt wird.

15. Verfahren nach einem der Ansprüche 13 oder 14, bei der die Steuereinheit (10) die selektive Heizvorrichtung (18a, 18b) so ansteuert, dass diese vor und/oder nach dem Richten der elektromagnetischen Strahlung oder Teilchenstrahlung auf das Aufbaumaterial durch die Bestrahlungsvorrichtung (6, 9) die Teilfläche (19) des Baufeldes (5) mindestens auf die Plateautemperatur heizt, wobei die Teilfläche (19) einen vordefinierten Mindestabstand (d) zum Rand des Baufelds (5) aufweist.

## Claims

1. Device (100) for the making of a three-dimensional object (3) by means of a layer-by-layer consolidation of a powderlike construction material (11) by electromagnetic radiation or particle radiation with:
a height-adjustable carrier (2), on which the object (3) is built, and whose horizontal dimension defines a construction field (5),
an irradiation device (6, 9) for directing the electromagnetic radiation or particle radiation onto regions of an applied layer of the construction material within the construction field (5) corresponding to an object cross-section (30),
a control unit (10) for controlling the irradiation device (6, 9) such that the powder particles of the construction material (11) are bonded together at the sites where the electromagnetic radiation or particle radiation impinges on the construction material,
**characterized by** a selective heating device (18a, 18b), which is designed so that an arbitrary partial surface (19) of the construction field (5) can be heated to a plateau temperature, which plateau temperature is significantly higher than the temperature of at least a portion of the construction field (5) outside the partial surface (19), wherein the control unit (10) is designed to drive the selective heating device (18a, 18b) such that the partial surface (19) has a predefined minimum distance (d) from the edge of the construction field (5).

2. Device according to claim 1, wherein the plateau temperature is at most 200° C, preferably at most 150° C, especially preferably at most 100° C less than an activation temperature of the construction material (11).

3. Device according to claim 1 or 2, wherein
the control unit (10) has a data storage, in which material parameter values with regard to a thermal behaviour of at least one construction material, preferably various construction materials, are stored.

4. Device according to claim 3, wherein
the control unit in operation specifies the minimum distance (d) in dependence on the material parameter values stored in the data storage for the construction material (11) being used.

5. Device according to one of claims 1 to 4, wherein the control unit (10) in operation specifies the shape of the partial surface (19) in dependence on the shape of the object cross-section (30) to be consolidated.

6. Device according to one of claims 1 to 5, wherein the control unit (10) in operation specifies the partial surface (19) such that its area extent is greater than that of the object cross-section (30) to be consolidated.

7. Device according to one of claims 1 to 6, wherein the selective heating device (18a, 18b) in operation directs electromagnetic radiation, especially laser radiation (18c), and/or particle radiation onto the surface of the construction material (11).

8. Device according to claim 7, wherein the irradiation device (6, 9) directs laser radiation (7) onto the surface of the construction material (11) and the laser radiation (18c) of the selective heating device (18a, 18b) has the same wavelength as that of the irradiation device (6, 9).

9. Device according to one of claims 1 to 8, which furthermore has a container (1) surrounding the construction field (5), wherein the device comprises a cooling and/or heating device for the cooling and/or heating of the container (1).

10. Device according to one of claims 1 to 9, with a temperature measuring device, preferably at the edge of the construction field (5), wherein the control unit (10) in operation controls the heat supply by the selective heating device (18a, 18b) such that a minimum plateau temperature to which the partial surface (19) of the construction field is heated in at least one operating state is by a predetermined amount above a temperature communicated by the temperature measuring device to the control unit (10).

11. Device according to claim 10, wherein the control unit (10) controls the selective heating device such that the partial surface (19) is preheated to a minimum plateau temperature which lies at least 300° C, preferably at least 400° C, especially preferably at least 800° C above the temperature communicated by the temperature measuring device to the control unit (10).

12. Device according to one of claims 1 to 11, wherein the control unit (10) drives the selective heating device (18a, 18b) such that it heats a partial surface (19) of the construction field (5) after the directing of the electromagnetic radiation or particle radiation onto the construction material by the irradiation device (6, 9) such that a cooldown rate in the partial surface (19) is at least 30%, preferably at least 50%, especially preferably at least 70% smaller than without the action of the selective heating device (18a, 18b), wherein the partial surface (19) has a predefined minimum distance (d) from the edge of the construction field (5).

13. Method for making a three-dimensional object (3) by means of a layer-by-layer consolidation of a powderlike construction material (11) by electromagnetic radiation or particle radiation in a device (100), especially according to claim 1 to 12,
wherein an object (3) is built on a height-adjustable carrier (2), whose horizontal dimension defines a construction field (5),
wherein the electromagnetic radiation or particle radiation is directed with the aid of an irradiation device (6, 9) onto regions of an applied layer of the construction material within the construction field (5) that correspond to an object cross-section (30),
wherein the irradiation device (6, 9) is controlled with a control unit (10) such that the powder particles of the construction material (11) are bonded together at the sites where the electromagnetic radiation or particle radiation impinges on the construction material,
**characterized in that**, with a selective heating device (18a, 18b), an arbitrary partial surface (19) of the construction field (5) is heated to a plateau temperature, which plateau temperature is significantly higher than a temperature of at least a portion of the construction field (5) outside the partial surface (19), wherein the control unit (10) drives the selective heating device (18a, 18b) such that the partial surface (19) has a predefined minimum distance (d) from the edge of the construction field (5).

14. Method according to claim 13, wherein the minimum distance (d) is specified in dependence on preliminary experiments in which the heat transmission ability of the construction material (11) used in the method is determined.

15. Method according to one of claims 13 or 14, wherein the control unit (10) drives the selective heating device (18a, 18b) such that the latter heats the partial surface (19) of the construction field (5) at least to the plateau temperature before and/or after the directing of the electromagnetic radiation or particle radiation onto the construction material by the irradiation device (6, 9), wherein the partial surface (19) has a predefined minimum distance (d) from the edge of the construction field (5).

## Revendications

1. Dispositif (100) destiné à fabriquer un objet tridimensionnel (3) par solidification couche par couche d'un matériau de construction (11) pulvérulent au moyen d'un rayonnement électromagnétique ou d'un rayonnement de particules, comportant :
un support réglable en hauteur (2), sur lequel est monté l'objet (3) et dont l'extension horizontale définit un champ de construction (5),
un dispositif d'irradiation (6, 9) destiné à orienter le rayonnement électromagnétique ou le rayonnement de particules sur des zones d'une couche du matériau de construction appliquée à l'intérieur du champ de construction (5) correspondant à une section transversale d'objet (30),
une unité de commande (10) destinée à commander le dispositif d'irradiation (6, 9) de manière à ce que les particules de poudre du matériau de construction (11) se lient les unes aux autres aux endroits où le rayonnement électromagnétique ou le rayonnement de particules impacte le matériau de construction,
**caractérisé par** un dispositif de chauffage sélectif (18a, 18b), qui est conçu pour pouvoir chauffer une surface partielle (19) quelconque du champ de construction (5) à une température de plateau, laquelle température de plateau est significativement supérieure à une température d'au moins une zone du champ de construction (5) située à l'extérieur de la surface partielle (19), dans lequel l'unité de commande (10) est conçue pour actionner le dispositif de chauffage sélectif (18a, 18b) de manière à ce que la surface partielle (19) présente une distance minimale prédéfinie (d) par rapport à la périphérie du champ de construction (5).

2. Dispositif selon la revendication 1, dans lequel la température de plateau est au maximum de 200°C, préférablement au maximum de 150°C, et de manière particulièrement préférable au maximum de 100°C, inférieure à une température d'activation du matériau de construction (11).

3. Dispositif selon la revendication 1 ou 2, dans lequel
l'unité de commande (10) comporte une mémoire de données, dans laquelle sont stockées des valeurs de paramètres de matériaux concernant un comportement thermique d'au moins un matériau de construction, de préférence de matériaux de construction différents.

4. Dispositif selon la revendication 3, dans lequel l'unité de commande, lors du fonctionnement, fixe la distance minimale (d) en fonction des valeurs de paramètres de matériau qui sont stockées dans la mémoire de données pour le matériau de construction (11) utilisé.

5. Dispositif selon l'une des revendications 1 à 4, dans lequel l'unité de commande (10), lors du fonctionnement, détermine la forme de la surface partielle (19) en fonction de la forme de la section transversale d'objet (30) à solidifier.

6. Dispositif selon l'une des revendications 1 à 5, dans lequel l'unité de commande (10), lors du fonctionnement, détermine la surface partielle (19) de manière à ce que sa superficie soit supérieure à celle de la section transversale d'objet (30) à solidifier.

7. Dispositif selon l'une des revendications 1 à 6, dans lequel le dispositif de chauffage sélectif (18a, 18b), lors du fonctionnement, oriente un rayonnement électromagnétique, notamment un rayonnement laser (18c), et/ou un rayonnement de particules, sur la surface du matériau de construction (11).

8. Dispositif selon la revendication 7, dans lequel le dispositif d'irradiation (6, 9) oriente un rayonnement laser (7) sur la surface du matériau de construction (11) et le rayonnement laser (18c) du dispositif de chauffage sélectif (18a, 18b) présente la même longueur d'onde que celle du dispositif d'irradiation (6, 9).

9. Dispositif selon l'une des revendications 1 à 8, comportant en outre un récipient (1) qui entoure le champ de construction (5), dans lequel le dispositif comprend un dispositif de refroidissement et/ou de chauffage pour refroidir et/ou chauffer le récipient (1).

10. Dispositif selon l'une des revendications 1 à 9, comportant un système de mesure de température, de préférence à la périphérie du champ de construction (5), dans lequel l'unité de commande (10), lors du fonctionnement, contrôle l'apport de chaleur par le dispositif de chauffage sélectif (18a, 18b) de manière à ce qu'une température de plateau minimale à laquelle la surface partielle (19) du champ de construction est chauffée soit, dans au moins un état de fonctionnement, supérieure d'une valeur prédéterminée à une température transmise par le système de mesure de température à l'unité de commande (10).

11. Dispositif selon la revendication 10, dans lequel l'unité de commande (10) actionne le dispositif de chauffage sélectif de manière à ce que la surface partielle (19) soit préchauffée à une température de plateau minimale qui est supérieure d'au moins 300°C, préférablement d'au moins 400°C, et de manière particulièrement préférable d'au moins 800°C, à la température transmise à l'unité de commande (10) par le système de mesure de température.

12. Dispositif selon l'une des revendications 1 à 11, dans lequel l'unité de commande (10) actionne le dispositif de chauffage sélectif (18a, 18b) de manière à ce que ce dernier, après l'orientation du rayonnement électromagnétique ou du rayonnement de particules sur le matériau de construction au moyen du dispositif d'irradiation (6, 9), chauffe une surface partielle (19) du champ de construction (5) de sorte qu'une vitesse de refroidissement dans la surface partielle (19) soit inférieure d'au moins 30 %, préférablement d'au moins 50 %, et de manière particulièrement préférable d'au moins 70 %, à celle obtenue sans l'effet du dispositif de chauffage sélectif (18a, 18b), dans lequel la surface partielle (19) présente une distance minimale prédéfinie (d) par rapport à la périphérie du champ de construction (5).

13. Procédé de fabrication d'un objet tridimensionnel (3) par solidification couche par couche d'un matériau de construction (11) pulvérulent au moyen d'un rayonnement électromagnétique ou d'un rayonnement de particules dans un dispositif (100), notamment selon les revendications 1 à 12,
dans lequel un objet (3) est monté sur un support réglable en hauteur (2), dont l'extension horizontale définit un champ de construction (5),
dans lequel le rayonnement électromagnétique ou le rayonnement de particules est orienté à l'aide d'un dispositif d'irradiation (6, 9) sur des zones d'une couche du matériau de construction appliquée à l'intérieur du champ de construction (5) correspondant à une section transversale d'objet (30).
dans lequel le dispositif d'irradiation (6, 9) est actionné par une unité de commande (10) de manière à ce que les particules de poudre du matériau de construction (11) se lient les unes aux autres aux endroits où le rayonnement électromagnétique ou le rayonnement de particules impacte le matériau de construction,
**caractérisé en ce qu'**une surface partielle (19) quelconque du champ de construction (5) est chauffée par un dispositif de chauffage sélectif (18a, 18b) à une température de plateau, laquelle température de plateau est significativement supérieure à une température d'au moins une zone du champ de construction (5) située à l'extérieur de la surface partielle (19), dans lequel l'unité de commande (10) actionne le dispositif de chauffage sélectif (18a, 18b) de sorte que la surface partielle (19) présente une distance minimale prédéfinie (d) par rapport à la périphérie du champ de construction (5).

14. Procédé selon la revendication 13, dans lequel la distance minimale (d) est fixée en fonction d'essais préliminaires, au cours desquels la capacité de transfert thermique du matériau de construction (11) utilisé dans le procédé est déterminée.

15. Procédé selon l'une des revendications 13 ou 14, dans lequel l'unité de commande (10) actionne le dispositif de chauffage sélectif (18a, 18b) de manière à ce que ce dernier chauffe la surface partielle (19) du champ de construction (5) au moins à la température de plateau, avant et/ou après l'orientation du rayonnement électromagnétique ou du rayonnement de particules sur le matériau de construction au moyen du dispositif d'irradiation (6, 9), dans lequel la surface partielle (19) présente une distance minimale prédéfinie (d) par rapport à la périphérie du champ de construction (5).
